# EUROPEAN PATENT APPLICATION

(11) **EP 3 640 875 A1**
(43) Date of publication of application: **22.04.2020**
(21) Application number: 19203841.2
(22) Date of filing: 17.10.2019
(51) Int. Cl.: G06Q 10/10, G06K 1/12

(54) **A COLLECTION, MANAGEMENT, TRACEABILITY AND ANALYSIS SYSTEM OF SPECIMENS AND OF CORRESPONDING SPECIFIC DATA**

(30) Priority: 18.10.2018 IT 201800009568
(71) Applicant: B.M.D. S.p.A., 00019 Bagni di Tivoli Roma (IT)
(72) Inventor: CARCANO, Riccardo, 00144 ROMA (IT); ASPETTI, Pio Ciro, 00012 GUIDONIA MONTECELIO (IT); PINCIARELLI, Luca, 00053 CIVITAVECCHIA (IT)
(74) Representative: Penza, Giancarlo

(57) **Abstract**

The invention describes a collection, management, traceability and analysis system of specimens (Si) and of specific corresponding data comprising: an operating processing centre (10) configured to identify a collection mission (M) of said specimens (Si), a mobile processing station (30), remotely deployable with respect to said operating centre (10) in a predetermined collection site (Sito_M;Sito_i_M) of specimens (Si), coupled to a specimens detection instrument 31, a printer (50), in data communication with the mobile processing station (30), and configured to print identification codes (COD_Si_M) of the collected specimens (Si_M); a container (40) arranged for a temporary storage of the collected specimens (Si_M), a clinical laboratory (70), arranged to receive the container (40) and to perform additional analyses (Sup_Si_M) on the specimens (Si_M), wherein the operating processing centre (10) is configured to perform a check to validate the data generated in the mobile processing station (30) and in the clinical laboratory (70) and, in the event of conformity, generate a first signal (OK_VAL) representative of a procedure for validated specimen tracking and analysis. The invention further envisages a database (91) accessible through protocols that can be encrypted and identification data for access through a password or that use artificial intelligence algorithms for biometric identification, where the collection mission (M) data can be stored and geolocalised, and in this way case studies can be created for analysis and the generation of statistics.

## Description

### FIELD OF APPLICATION

The present invention relates to a collection, management, traceability and analysis system of specimens and of specific corresponding data.

In particular, the invention relates to a collection, management, traceability and analysis system of specimens and of specific corresponding data, in contexts relating to safety and/or environmental protection.

The following description relates to this field of application for the sole purpose of simplifying the disclosure thereof.

### PRIOR ART

In many operating settings which can also be harsh, typical of public facilities with functions strictly related to the management of safety and environmental protection and in particular of the armed forces, the police forces, emergency operators and public rescue services, public environmental laboratory operators, the computerization and automation of the collection of information, specimens and evidence, forensic and others, and the results of analyses and the management of databases are critical aspects, but which are often neglected.

The object of the present invention is to realise a system for the collection, management, traceability and analysis of specimens and corresponding specific data that operates efficiently.

Another object of the present invention is to realise a traceability and analysis system of specimens and of specific corresponding data that allows simple interaction in the entry of data.

Another object of the present invention is to realise a traceability and analysis system of specimens and of specific corresponding data that allows simple and effective consultation of the data entered.

Another object is to provide a traceability and analysis system of specimens and of specific corresponding data that guarantees the security of the data processed and the consistency of the analyses performed.

### SUMMARY OF THE INVENTION

The invention describes a collection, management, traceability and analysis system of specimens and of specific corresponding data, according to what is described in claim 1.

Advantageous aspects are disclosed in dependent claims 2 to 13.
The invention achieves at least the following technical effects:
- suitable preparation of the mission, both of the personnel and the materials;
- provision of an overview of the activities performed in a given theatre or activity/operating area;
- efficient operation;
- simple interaction in data entry, also in the event in which personal protective equipment needs to be worn;
- simple and effective consultation of the data entered into a reference database and dynamic and searchable viewing thereof on a geo-cartographic map connected to the database;
- security of the processed data;
- database management;
- consistency of the analyses performed.

The technical effects/advantages mentioned, and other technical effects/advantages of the invention, will emerge in further detail from the description provided herein below of an example of embodiment provided by way of approximate and non-limiting example with reference to the appended drawings.

### BRIEF DESCRIPTION OF THE DRAWINGS

Figure 1 is a schematic view of a first portion of a video-control system for production plants, according to the invention.
Figure 2 is a schematic view of a second portion of the video-control system for production plants, according to the invention.

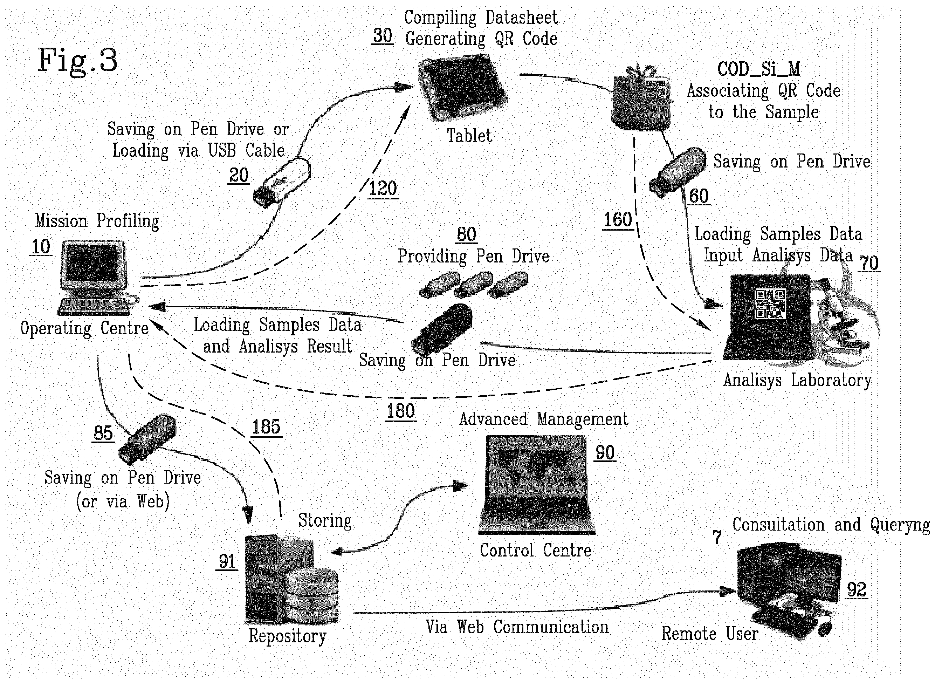

Figure 3 is a detail of a preferred embodiment of the invention of figure 1 and 2.
Figure 4 is a detail referring to a component of Figure 1.

### DETAILED DESCRIPTION

In general, the invention describes a management system inclusive of the activities inherent to pre-mission and post-mission organisation, collection, sampling, prompt analysis in the field and in the laboratory, traceability, viewing on the geo-cartographic map, database management of "environmental" and "biological" specimens, those of military relevance, of the police forces and of emergency operators, also taken in confined areas or areas under military threat.

The definition and planning of procedures that are to be implemented by operators in the field has an important role in the management stage.

In more detail, the present invention relates to a management system of interventions in the field for the collection, traceability and analysis of specimens and of specific corresponding data.

The invention further envisages a database accessible through protocols that can be encrypted and identification data for access through a password or that use artificial intelligence algorithms for biometric identification, where the collection mission data can be stored and geolocalised, and in this way case studies can be created for analysis and generation of statistics.

The system that is to be described intends to computerise and simplify the entire specimen collection, management, tracking and analysis process, also for application in the military/forensic setting, allowing on one hand the data entry and specimen storage operations to be facilitated and on the other hand the information collected over time to be organised in a linear and rational way in order to access such information at any time simply, but while guaranteeing the security of the specimens and data processed.

The system according to the invention enables the traceability and analysis of specimens and specific corresponding data, in particular in contexts relating to safety and/or environmental protection.

The invention describes in general terms a collection, management, traceability and analysis system of specimens and of specific corresponding data comprising: an operating processing centre configured to identify a collection mission of the specimens, a mobile processing station, also remotely deployable with respect to the operating centre in a predetermined collection site of specimens Si and coupled to a specimens detection instrument, a printer, in data communication with the mobile processing station, and configured to print identification codes of the collected specimens; a container arranged for a temporary storage of the collected specimens, a clinical laboratory, arranged to receive the container and to perform additional analyses on the specimens, wherein the operating processing centre is configured to perform a check to validate the data generated in the mobile processing station and in the clinical laboratory and, in the event of conformity, generate a first signal representative of a procedure for validated specimen tracking and analysis.

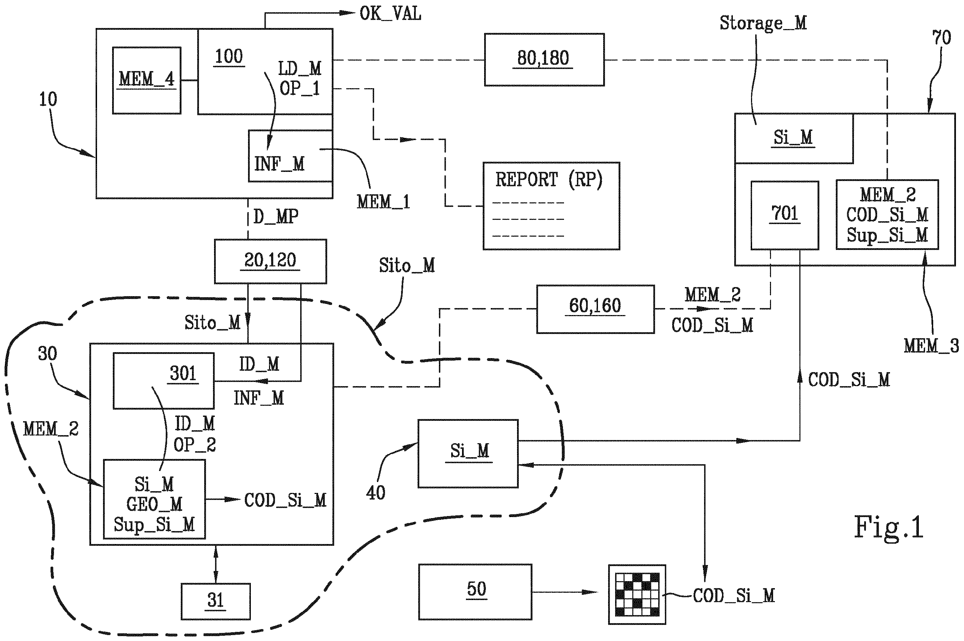

With reference to figure 1, the system essentially comprises an operating processing centre 10 substantially dedicated to a profiling of a recovery mission M of specimens Si, a mobile processing station 30, deployed in a collection site for the recovery of the specimens Si related to the mission M, and a clinical laboratory 70, arranged to receive the specimens Si and the data related to the specimens Si_M collected in the collection site and to perform additional analyses Sup_Si_M on the collected specimens Si. With particular reference to figure 1, the operating processing centre 10 comprises an operating processing unit 100, configured to identify a collection mission M of the specimens Si, in particular to prepare the personal protection and sampling material, generating a unique mission identifier ID_M.

Preferably, the unique mission identifier ID_M comprises a first IT operator OP_1, in particular a pointer, that routes to a first memory area MEM_1 of the operating processing unit 100.

The first memory area MEM_1 is arranged to contain profiling data D_MP of the collection mission M identified.

According to the invention, the first memory area MEM_1 comprises at least data representative of a collection site Sito_M; Sito_i_M of the specimens Si.

The system envisages the planning of the mission M; in particular, each mission can be comprised of various sub tasks sub_M to be performed in different sites. Each task and related sub task is identified by a unique code.

Once the interventions sub_M have been defined, it will be possible to define an intervention team SQ_sub_M also assigning the corresponding protection and sampling equipment Att_sub_M.

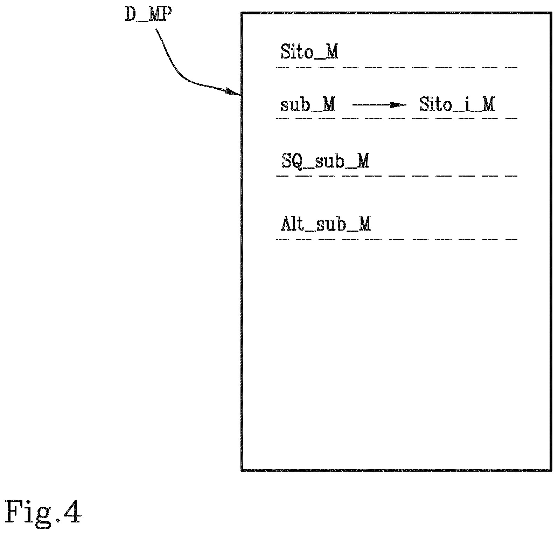

Consequently, with particular reference to figure 4, according to the invention, the profiling data D_MP of the mission M comprise one or more from among:
- localisation data of a site sito_M assigned to the mission M;
- partial intervention data sub_M of each mission M assigned to different sites sito_i_M, wherein the combination of the partial intervention data sub_M defines the mission M;
- composition data of an intervention team SQ_sub_M of each partial intervention sub_M;
- data relating to equipment (Att_sub_M) available to each intervention team (SQ_sub_M).

The operating processing unit 100 is configured, once the profiling data have been defined, to automatically generate the sampling data sheets or another synthetic form, input data detection sheets or a similar medium for specimens, complete with the parameters to be recorded/filed.

Before the start of the mission M the list of materials needed by the sampling/in-field activity operators can be checked by one or more checklists loaded onto the IT system in advance. In detail, the software module of the operating centre 10 implements the following functions:
- Sampling and activity plan management;
- Planning and scheduling;
- Work distribution per operator/equipment;
- External sampling team management;
- Checklist management.

The system of the invention comprises first data sharing means 20,120 configured to couple the operating processing centre 10 to the mobile processing station 30.

Preferably, the data sharing means 20, 120 comprise first independent storage means 20 at least of the profiling data D_MP, in particular a digital memory stick, more in particular a USB memory stick.

In particular, such hardware supports are configured for the management of the aforesaid data in encrypted format.

The first independent storage means 20 are arranged to receive at least profiling data D_MP from the operating processing centre 10 and to copy them onto the mobile processing station 30.

Alternatively, the data sharing means 20,120 comprise first connection means 120 at least for the profiling data D_MP, in particular a connection cable, more in particular a USB connection cable.

The first connection means 120 are arranged for direct transmission of data from the operating processing centre 10 to the mobile processing station 30.

The mobile processing station 30, according to the invention, can also be deployed remotely with respect to said operating centre 10 in the predetermined collection site Sito_M of the specimens Si assigned to the mission M.

In a particular case, the mobile processing station 30 can also be deployed close to the operating centre 10.

Alternatively, the mobile processing station 30, according to the invention, can be deployed remotely with respect to the operating centre 10 in distributed mode on the different collection sites Sito_M of the specimens Si assigned to the mission M.

The mobile processing station 30 comprises, for example, a rugged tablet, a smartphone or equivalent media.

In particular, the processing station 30 must have "rugged" characteristics, i.e. for example it must be waterproof and dust proof, resistant to impacts and able to operate also in non-standard temperature conditions, in particular extreme conditions; for this reason, tablets, smartphones or equivalent conventional media, i.e. large scale retail commercial ones, are not suitable

The mobile processing station 30 is coupled to a specimen detection instrument 31 arranged for a preliminary analysis of the specimens Si, determining data relating to the specimens Si_M.

The preliminary analysis, or in-field analysis, enables general indications to be obtained quickly on the collected specimens.

The preliminary analysis is performed in order to have first indications on the nature of the specimens prior to the specific analysis that will be performed at the clinical laboratory, as described below.

Normally, the preliminary analysis is performed with portable instrumentation and with a reduced confidence index with respect to laboratory analysis, therefore the latter is necessary in order to confirm the preliminary results.

In a non-limiting example, in the event of detection of toxic gases, the specimen detection instrument 31 can comprise one from among a known portable IMS technology detector or variants thereof, a HPMS or Raman or FTIR spectrometer.

The profile of the mission is loaded onto the rugged tablet, or equivalent HW medium, provided to the operating teams. In this way the sampling operators can proceed to fill in the sampling data sheet and record the samples collected and any analyses performed in situ.

The representative data of the collection sites Sito_M,Sito_i_M are obtained from the profiling data D_MP by means of first data sharing means 20,120.

According to the invention, the mobile processing station 30 comprises a specimens processing unit 301 arranged to download the unique mission identifier ID_M and the profiling data D_MP of the collection mission M during the coupling between the mobile processing station 30 and the operating processing centre 10.

The specimens processing unit 301 is configured to allocate a second memory area MEM_2 of the mobile processing station 30, associating the second memory area MEM_2 with the unique mission identifier ID_M. Preferably, the association is performed by means of a second IT operator OP_2, in particular a pointer, which from the specimens processing unit 301, routes to the second memory area MEM_2,

The specimens processing unit 301 is further configured to record, in the second memory area MEM_2 the data related to the specimens Si_M that have been collected in the predetermined collection site Sito_M,Sito_i_M by means of the specimens detection instrument 31.

Preferably, the data related to the specimens Si_M collected in the predetermined collection site Sito_M comprise:
- descriptive data of the collected specimens Si_M;
   and/or
- data resulting from the analysis carried out in situ on the collected specimens Si_M.

Preferably, the descriptive data of the specimens Si_M comprise one or more of at least:
- photos, textual descriptions, audio and/or video recordings, indications of factual data, information on the site, information representative of the finding date and time, information on local personnel, PoCs, minders, situations occurring around the collected specimens Si_M, etc.

Preferably, the data resulting from the analysis carried out in situ on the collected specimens Si_M comprises one or more of at least:
- chemical and biological analyses of the specimens, also of an expeditious type, analyses carried out with multichannel techniques for the research of radionuclides, forensic analyses, analysis for the research of explosives or similar products, analysis for the research of pollutants, analysis for the research of narcotic substances, etc.

The specimens processing unit 301 is further configured to geolocalise the mobile processing station 30 and record corresponding geolocation data GEO_M in the second memory area MEM_2.

Alternatively or additionally, the specimens processing unit 301 is configured to georeference the specimens Si_M collected and to record corresponding georeferencing data GEO_Si_M in the second memory area MEM_2.

Furthermore, the specimens processing unit 301 is configured to generate an identification code COD_Si_M of the specimens Si_M collected, defined at least as a function of the association between the second memory area MEM_2 and the unique mission identifier ID_M.

Preferably, each specimen is coupled with an identification code COD_Si_M

According to the invention, the identification codes COD_Si_M comprise the critical information associated with the activity performed and the specimen collected.

In general, the identification codes COD_Si_M comprise a unique progressive number that identifies the specimen, a date/time group, location data and geodata and operating team data, i.e. of the intervention team.

In a preferred embodiment of the invention, the identification code COD_Si_M comprises:
- a unique identifier for the specimen Si_M;
- representative data of the date and time of collection of the specimen Si_M;
- data representative of the geographical deployment of the specimen GEO_Si_M; in particular, the latter data relate to longitude and latitude coordinates, obtained via GPS if a connection to the relevant location system is available, or related to an identifier of the location, if a connection is not available.

Even more in particular, each identification code COD_Si_M comprises an association between the specimen data, the georeferencing data GEO_Si_M of the specimen and the geolocation data of the mobile station 30.

A Chain of Custody will be associated with the specimens, which will be used as legal proof of the integrity of the packaging and transport of the specimens from the sampling place to the laboratory that is intended to perform the laboratory analyses.

Preferably, the identification codes COD_Si_M comprise, as well as those just mentioned, one or more of the descriptive data of the collected specimens Si_M and/or one or more of the data resulting from the analyses carried out in situ on the collected specimens Si_M.

The system of the invention comprises an apparatus 50 in data communication with the mobile processing station 30.

The apparatus 50 is provided to generate the identification codes COD_Si_M of the collected specimens Si_M and, in particular, data relating to the sample; for example, if a sample is of the radiological type, then there are radioactivity values.

Preferably, the identification codes COD_Si_M comprise, as well as those just mentioned, one or more of the descriptive data of the collected specimens Si_M and/or one or more of the data resulting from the analyses carried out in situ on the collected specimens Si_M.

Preferably the identification codes COD_Si_M comprise an alphanumeric code.

Alternatively, preferably the identification codes COD_Si_M comprise a tag or an Rfid label.

Preferably, the apparatus 50 is a device that enables writing or creating an Rfid label or tag.

Preferably, the apparatus 50 comprises a printer.

Preferably, the printer 50 is a printer configured to print a QR code. Preferably, the QR code can be encrypted or read only in possession of an interpretation key.

Preferably, the QR code will be generated with cryptography based on cryptography "key" exchange.

According to the invention, the QR code and Rfid tag contain all the information on the activities performed in the pre-mission and sampling step, including any in situ analyses.

The system of the invention comprises a container for the temporary storage of the individual specimens Si_M, that were collected in the predetermined collection site Sito_M,Sito_i_M by means of the specimen detection instrument 31, and for definitive coupling with the identification codes COD_Si_M printed.

According to the invention, different types of container are provided according to the nature of the sample and in particular suitable for CBRNe (Chemical, Biological, Radiological, Nuclear and explosives) and biomedical sampling.

The characteristics of the container 40 are defined as a function of the specific mission and/or type of specimens and/or the specific research instructions.

By way of non-limiting example, the container 40 could be a container for fluids or a vial for liquids also of reduced dimensions (e.g. 10 ml), but also a lead well (for radioactive samples) of considerable corresponding weight.

The system further comprises second data sharing means 60,160 configured to couple the mobile processing station 30 to a clinical laboratory 70;

Preferably, the second data sharing means 60, 160 comprise second independent storage means 20 at least of the profiling data D_MP and the data contained in the second memory area MEM_2, in particular a digital memory stick, more in particular a USB memory stick.

The second independent storage means 60 are arranged to receive at least profiling data D_MP from the mobile processing station 30 together with the data contained in the second memory MEM_2, and to copy them in a clinical laboratory 70.

Alternatively, the data sharing means 60,160 comprise second connection means 160 for the profiling data D_MP and for the data contained in the second memory MEM_2, the means being in particular a connection cable, more in particular a USB connection cable.

The second connection means 160 are arranged for direct transmission of data from the mobile processing station 30 to the clinical laboratory 70. The system of the invention further comprises the aforesaid clinical laboratory 70.

The clinical laboratory 70 is arranged to receive the container (40) and to perform additional analyses Sup_Si_M on the specimens Si.

The clinical laboratory 70 comprises storage means (Storage_M) arranged to contain the specimens Si_M stored temporarily in the container 40, and a processing unit 701 configured to be coupled to the second data sharing means 60,160.

According to the invention, the processing unit 701 is configured to:
- download the contents of the second memory MEM_2 and the identification code COD_Si_M of the collected specimens Si_M;
- detect from the container 40 the identification code COD_Si_M of the collected specimens Si_M;
- perform a comparison between said identification codes COD_Si_M;
- if the two identification codes COD_Si_M correspond, allocate a third memory area MEM_3 in the clinical laboratory 70, coupling the third memory area MEM_3 to the unique mission identifier ID_M, and record in the third memory area MEM_3 the data of said second memory MEM_2 and the identification code COD_Si_M.

Preferably, the unique mission identifier ID_M comprises a third IT operator OP_3, in particular a pointer, that routes to the third memory area MEM_3 in the clinical laboratory 70.

The processing unit 701 is further configured to record in the third memory MEM_3 data from the additional analyses Sup_Si_M performed on the specimens Si_M stored in the storage means Storage_M.

The additional analysis in the laboratory is performed with sophisticated instrumentation and with specially trained personnel and enables a high degree of confidence with respect to the preliminary analysis performed using the specimens detection instrument 31 locally at the mission site.

In a non-limiting example, in the event of detecting toxic gases, a known bench instrument (or equivalent) of the GC/MS type is used.

The data from the additional analyses Sup_Si_M are related to analyses that can be likened to those performed locally at the mission site M, but with the most advanced technology described and other additional analyses.

The system further comprises third data sharing means 80,180 configured to couple the clinical laboratory 70 to the operating processing centre 10. The sharing of the data can be performed according to encrypted data protocols.

Preferably, the third data sharing means 80,180 comprise third independent storage means 80 at least of the profiling data D_MP, in particular a digital memory stick, more in particular a USB memory stick. The third independent storage means 80 are arranged to receive profiling data D_MP from the clinical laboratory 70 together with the data contained in the third memory MEM_3, and to copy them into the operating processing unit 100 of the operating centre 10.

Alternatively, the data sharing means 80,180 comprise third connection means 180 for the profiling data D_MP and for the data contained in the third memory MEM_3, the means being in particular a connection cable, more in particular a USB connection cable.

The third connection means 180 are arranged for a direct transmission of data from the clinical laboratory 70 to the operating processing unit 100 of the operating centre 10.

The operating processing unit 100 is configured to:
- locally download in a fourth memory MEM_4 the contents of the third memory MEM_3 through coupling with said third data sharing means 80,180, wherein the fourth memory MEM_4 comprises both the data in the second memory MEM_2 generated by the mobile processing station 30, and the data in the third memory MEM_3 generated by the clinical laboratory 70;
- perform a check to validate the data contained in the fourth memory MEM_4 by comparing the data relating to the second memory MEM_2 with corresponding data relating to the third memory MEM_3;
if the data of the two memories correspond, generate a first representative signal OK_VAL of a procedure for validated specimen tracking and analysis and mark the data in said fourth memory MEM_4 as validated data D_VAL.

By way of non-limiting example, the operating centre 10 could supplement a validation entity that performs the validation and that is a third entity with respect to whoever performed the activities in the field and with respect to whoever analysed the specimens while not having any explicit tasks in the management of the mission. This entity could close the final finding/tracking/analysis procedure by "validating" the entire process if the data detected locally at the mission site are compatible with those detected in the laboratory.

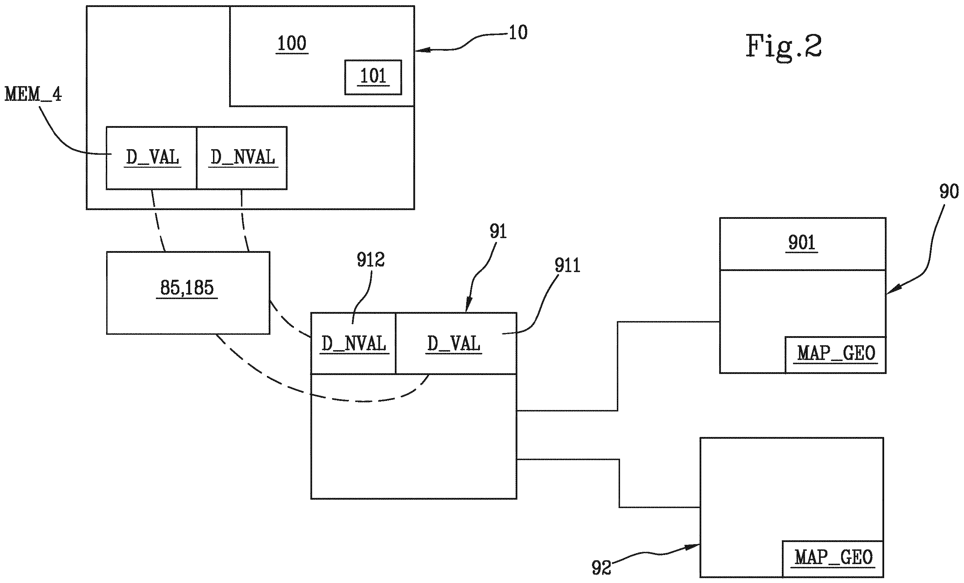

In a practical example, if in the case of chemical specimens, the prompt in-field analyses indicate the presence of biological agents but the laboratory only analyses the samples for the chemical part, the "validator" should make this substantial discrepancy emerge by taking/suggesting the relevant corrective actions. Vice versa, in the event of uniformity in the analyses, the "validator" should place the validation on the entire process. With particular reference to figure 2, the system of the invention comprises a database 91 arranged to comprise the data of the missions M and that can be connected to the operating centre 10.

As described in detail below, the data are shown on the geo-cartographic map highlighting the location thereof; these data are available, through profiling, also for the "historical" test of the activities performed at this site. In general, according to the invention, the database 91 is accessible through protocols that can be encrypted and identification data for access through a password or that use artificial intelligence algorithms for biometric identification, where the collection mission M data can be stored and geolocalised, and in this way case studies can be created for analysis and generation of statistics.

The database 91 comprises a first portion 911 arranged to comprise the validated data D_VAL and a second portion 912 arranged to comprise the invalidated data D_NVAL.

The operating processing unit 100 is configured to send the validated data D_VAL and invalidated data D_NVAL to the database 91 for subsequent consultations.

In other words, both the validated data D_VAL and the invalidated data D_NVAL are filed in a central repository 91 at the control centre by means of a memory stick or an internet connection if available. The invalidated data are filed in an ad hoc database.

The system further comprises fourth data sharing means 85,185 configured to couple the operating processing station 10 with the database 91.

Preferably, the sharing can be performed through encrypted protocols and means, based on the exchange of interpretation keys.

Preferably, the third data sharing means 85,185 comprise fourth independent storage means 85, in particular a digital memory stick, more in particular a USB memory stick, preferably encrypted.

Alternatively, the data sharing means 85,185 comprise fourth connection means 185, the means being in particular a connection cable, more in particular a USB connection cable.

In general, the fourth connection means 185 may be comprised of any type of connection, via cable, wireless, on any medium with encrypted communication protocols.

The system of the invention further comprises (fig.2) a control centre 90, connectable to the database 91, and comprising an interface 901 configured to allow access to the data of the missions M in the database 91.

From the control centre subject to authentication, it is possible to consult all the information of all the missions M for all the required purposes. It is possible to compare data, process statistics and verify the correctness of the performance of every single Mission already completed with reference to the geolocation of the finding activities and analyses performed.

The system of the invention further comprises (fig.2) a web interface 92 configured for access, subject to authentication, to the mission data M in the database 91.

In a preferred embodiment, the web interface 92 comprises a software application which can be accessed via browser.

Through such application, it will be possible to share and manage online the data relating to the mission M such as the description of the sampling site, the activities performed, the investigation and sampling points, the analysis data local to the site and in the laboratory and other information which can be managed and shared in real time between all the authorised users.

This technical solution enables access to the data locally and remotely, both from fixed and mobile stations (computer, palmtop computer, tablet, smartphone).

Preferably, access to the data can take place using encrypted protocols. The reading of the QR Code and the Rfid label/tag can take place by means of exchanging interpretation keys so as to enable encrypted data exchange.

The application can be fully customised and with visibility rights that can be set for each profile and individual user.

The georeferencing of the collection points differentiated by type is performed by means of Google Maps, OpenStreetMap or another cartographic system.

In other words, with reference to what was previously described, the interface 901 and the web interface 92 are, one or both, configured for viewing a digital geocartographic map MAP_GEO wherein the geolocation data GEO_M, the georeferencing data GEO_Si_M and the identification codes COD_Si_M are displayed, so that, starting from the identification codes COD_Si_M, information related to previous identification codes COD_Si_M can be extracted from the database 91 with the same geolocation data GEO_M and/or georeferencing data GEO_Si_M.

In this way it will be possible:
To have a historic memory of all the activities performed in a specific context that may be useful, over time, to the different personnel appointed; To check whether the area to be inspected/monitored/recognised has already been subject to similar activities. In the positive case, it is therefore useful to have a comparison/reference parameter not only with respect to the functional environment but also with respect to the social and economic situation based on one or more past activities.

To store in a repository all the data acquired so that they can be consulted not only from the operating theatre, but also from the home country for the purpose of sharing information and, possibly, promoting the consultancy of the sector experts by sharing and analysing the data obtained from the laboratory tests.

In particular, the operating processing unit 100 comprises a search module 101 configured to query the database 91 starting from the geolocation data GEO_M and/or georeferencing data GEO_Si_M and to extract the corresponding identification codes COD_Si_M; the search module 101 is further configured to send, to the interface 901 to the web interface 92 the identification codes COD_Si_M extracted so that they can be viewed on the digital geocartographic map MAP_GEO.

According to the invention, access to the mission data M in the database 91 enables the following functions:
- querying the database (91) with customisable filters;
- rapid extraction of said data of the missions M, highlighting out-of-range values;
- comparison between analysis parameters;
- elaboration of statistical indicators provided automatically by the control centre 90;
- monitoring of the missions M /activities;
- extraction of missions data M in a format compatible with spreadsheets. In general, it is to be considered that in the present context and in the following claims, the processing unit can be considered to be comprised of a single electronic device, appropriately programmed to perform the functionalities described, and the different modules can correspond to hardware entities and/or routine software that are part of the programmed device to perform the described functions.

Alternatively or additionally, the processing unit can be considered to be comprised of a plurality of electronic devices on which the functions and corresponding functional modules can be distributed.

The processing units can make use of one or more processors for executing the described functions.

The functional modules can also be distributed over different local or remote computers, depending on the architecture of the network in which they reside.

In the description, the memories to which reference has been made, which may be fixed, mobile, mass or volatile, and any others if necessary, are encrypted memories.

## Claims

1. A traceability, collection, management and analysis system of specimens (Si) and of specific corresponding data, in contexts relating to safety and/or environmental protection, wherein the system comprises:
an operating processing centre (10) comprising:
an operating processing unit (100) configured to identify a collection mission (M) of said specimens (Si), generating a unique mission identifier (ID_M), the unique mission identifier (ID_M) being configured to route to a first memory area (MEM_1) of said operating processing unit (100) arranged to contain profiling data (D_MP) of the identified collection mission (M), comprising at least representative data of a collection site (Sito_M; Sito_i_M) of said specimens (Si) and one or more of;
- localisation data of a site (sito_M) assigned to the mission (M);
- partial intervention data (sub_M) of each mission (M) assigned to different sites (sito_i_M), wherein the combination of the partial intervention data (sub_M) defines the mission (M);
- composition data of an intervention team (SQ_sub_M) of each partial intervention (sub_M);
- data relating to equipment (Att_sub_M) available to each intervention team (SQ_sub_M);
first data sharing means (20,120) configured to couple said operating processing centre (10) to a mobile processing station (30);
said mobile processing station (30), remotely deployable with respect to said operating centre (10) in said predetermined collection site (Sito_M;Sito_i_M) of said specimens (Si), said representative data of said collection site (Sito_M;Sito_i_M) being obtained from said profiling data (D_MP) through said first data sharing means (20,120);
wherein the mobile processing station (30) is coupled to a specimen detection instrument (31) arranged for a preliminary analysis of the specimens Si, determining data relating to said specimens (Si_M);
wherein the mobile processing station (30) comprises:
a specimens processing unit (301) arranged to:
download said unique mission identifier (ID_M) and said profiling data (D_MP) of the collection mission (M) during said coupling between said mobile processing station (30) and said operating processing centre (10);
allocate a second memory area (MEM_2) of said mobile processing station (30), associating said second memory area (MEM_2) with said unique mission identifier (ID_M);
record, in said second memory area (MEM_2) said data relating to said specimens (Si_M) collected in said predetermined collection site (Sito_M;Sito_i_M) through said specimens detection instrument (31);
geolocalise said mobile processing station (30) and record the corresponding geolocation data (GEO_M) in said second memory area (MEM_2)
and/or
georeference said collected specimens (Si_M) and record corresponding georeferencing data (GEO_Si_M) in said second memory area (MEM_2)
generate an identification code (COD_Si_M) of said collected specimens (Si_M) defined at least as a function of said association between said second memory area (MEM_2) and said unique mission identifier (ID_M);
an apparatus (50), in data communication with the mobile processing station 30 and arranged to generate said identification codes (COD_Si_M) of said collected specimens (Si_M);
a container (40) arranged for a temporary storage of said specimens (Si_M) collected through said specimens detection instrument (31) in said predetermined collection site (Sito_M;Sito_i_M), and for an unalterable coupling with said printed identification codes (COD_Si_M);
second data sharing means (60,160) configured to couple said mobile processing station (30) to a clinical laboratory (70);
said clinical laboratory (70), arranged to receive said container (40) and to perform additional analyses (Sup_Si_M) on said specimens (Si_M), comprising:
storage means (Storage_M) arranged to contain said specimens (Si_M) temporarily stored in said container (40);
a processing unit (701) configured to be coupled to said second data sharing means (60,160) and configured to:
- download the contents of said second memory (MEM_2) and said identification code (COD_Si_M) of said collected specimens (Si_M);
- detect from said container (40) said identification code (COD_Si_M) of said collected specimens (Si_M);
- perform a comparison between said identification codes (COD_Si_M);
- if the two identification codes (COD_Si_M) correspond, allocate a third memory area (MEM_3) in said clinical laboratory (70), coupling said third memory area (MEM_3) to said unique mission identifier (ID_M), and record in said third memory area (MEM_3) said data of said second memory (MEM_2) and said identification code (COD_Si_M);
- record in said third memory (MEM_3) data from said additional analyses (Sup_Si_M) performed on said specimens (Si_M) stored in said storage means (Storage_M);
third data sharing means (80,180) configured to couple said clinical laboratory (70) to said operating processing centre (10) said operating processing unit (100) is configured to:
- locally download in a fourth memory (MEM_4) the contents of said third memory (MEM_3) through coupling with said third data sharing means (80,180), wherein said fourth memory (MEM_4) comprises both the data in the second memory (MEM_2) generated by said mobile processing station (30), and corresponding data in the third memory (MEM_3) generated by said clinical laboratory (70);
- perform a check to validate the data contained in said fourth memory (MEM_4) by comparing the data relating to said second memory (MEM_2) with the data relating to said third memory (MEM_3);
if the data of the two memories correspond, generate a first representative signal (OK_VAL) of a procedure for validated specimen tracking and analysis and mark the data in said fourth memory (MEM_4) as validated data (D_VAL);
if the data of the two memories do not correspond, generate a second representative signal (NO_VAL) of a procedure for invalidated specimen tracking and analysis and mark the data in said fourth memory (MEM_4) as invalidated data (D_NVAL).

2. The system according to claim 1, comprising a database (91) arranged to comprise the data of said missions (M) and connectable to said operating centre (10),
wherein said database (91) comprises a first portion (911) arranged to comprise said validated data (D_VAL) and a second portion (912) arranged to comprise said invalidated data (D_NVAL),
and said operating processing unit (100) is configured to send the validated data (D_VAL) and invalidated data (D_NVAL) to said database (90) for subsequent consultations.

3. The system according to claim 2, further comprising a control centre (90), connectable to said database (91), comprising an interface (901) configured to allow access to said data of said missions (M) in said database (91).

4. The system according to claim 2 or 3, comprising a web interface (92) configured to allow access, upon authentication, to said data of said missions (M) in said database (91), the web interface (92) preferably comprising a software application accessible via browser.

5. The system according to claims 3 or 4 wherein one or more from among said interface (901) and said web interface (92) is configured for viewing a digital geocartographic map (MAP_GEO) wherein said geolocation data (GEO_M), said georeferencing data (GEO_Si_M) and said identification codes (COD_Si_M) are displayed, so that, starting from said identification codes (COD_Si_M), information related to previous identification codes (COD_Si_M) can be extracted from said database (91) with the same geolocation data (GEO_M) and georeferencing data (GEO_Si_M).

6. The system according to claim 5, wherein said operating processing unit (100) comprises a search module (101) configured to:
- query said database (91) starting from said geolocation identification data (GEO_M) and/or said georeferencing data (GEO_Si_M) and extract all the corresponding identification codes (COD_Si_M);
- send, to said interface (901) or to said web interface (92), said identification codes (COD_Si_M) extracted so as to be viewed on said digital geocartographic map (MAP_GEO).

7. The system according to any one of claims 3 to 6, wherein said access to said data of said missions (M) in said database (91) allows the following functions:
- querying the database (91) with customisable filters;
- rapid extraction of said data of the missions (M), highlighting out-of-range values;
- comparison between analysis parameters;
- elaboration of statistical indicators provided automatically by the control centre (90);
- monitoring of the missions (M) /activities;
- extraction of missions data M in a format compatible with spreadsheets.

8. The system according to any one of the preceding claims wherein said container (40), arranged for the temporary storage of said specimens (Si_M), is provided in different types according to the nature of the sample, in particular suitable for a sample of the CBRNe type - i.e. Chemical, Biological, Radiological, Nuclear, and explosives - and biomedical.

9. The system according to any one of the preceding claims, wherein said data related to said specimens (Si_M) collected in said predetermined collection site (Sito_M) comprises one or more of:
- descriptive data of the collected specimens (Si_M);
- data resulting from the analysis carried out in situ on said collected specimens (Si_M).

10. The system according to claim 9, wherein said descriptive data of the collected specimens (Si_M) comprises one or more of at least:
- photos, textual descriptions, recordings, audio and/or video, indications of factual data, information on the site, information on local personnel, PoC, minders, situations occurring around the collected specimens Si_M.

11. The system according to claim 9 or 10, wherein the data resulting from the analysis carried out in situ on the collected specimens (Si_M) comprises one or more of at least:
- chemical and biological analyses of the specimens, also of an expeditious type, analyses carried out with multichannel techniques for the research of radionuclides, forensic analyses, analysis for the research of explosives or similar products.

12. The system according to any one of the preceding claims, wherein said identification codes (COD_Si_M) comprise:
- a unique identifier for the specimen Si_M;
- representative data of the date and time of collection of the specimen Si_M;
- representative data of the geographic location of the specimen GEO_Si_M
and
said identification code generation apparatus (50) is arranged to generate said identification code (COD_Si_M).

13. The system according to any one of claims 9 to 12, wherein
said identification code (COD_Si_M) further comprises one or more of the descriptive data of the collected specimens (Si_M) and/or one or more of the data resulting from the analyses carried out in situ on the collected specimens (Si_M);
and
said identification code generation apparatus (50) is arranged to generate said identification code (COD_Si_M).

14. The system according to any one of the preceding claims, wherein said identification codes (COD_Si_M) comprise one or more from among a QR code or an RFID tag;
and said identification code generation apparatus (50) is:
a printer configured to print a corresponding QR code or
a device arranged to generate a corresponding RFID tag.

15. The system according to any one of the preceding claims, wherein one or more of the following is valid:
- said data sharing means (20,60,80;120,160,180) comprise independent storage means (20,60,80), in particular a digital memory stick, more in particular a USB memory stick;
- said independent storage means (20,60,80) and/or memories (MEM_1,MEM_2, MEM_3, MEM_4) are encrypted;
- said data sharing means (20,60,80;120,160,180) comprise data transmission means (120,160,180), in particular a connection cable, more in particular a USB connection cable.
